**Europäisches Patentamt**

**European Patent Office**

**Office européen des brevets**

(19)

(11) Veröffentlichungsnummer: **0 388 496**
**A1**

## (12) EUROPÄISCHE PATENTANMELDUNG

(21) Anmeldenummer: **89105196.3**

(22) Anmeldetag: **23.03.89**

(51) Int. Cl.5: **C05G 5/00, C05F 15/00, E01C 9/00**

(43) Veröffentlichungstag der Anmeldung:
**26.09.90 Patentblatt 90/39**

(84) Benannte Vertragsstaaten:
**AT BE DE FR NL**

(71) Anmelder: **Reuss, Rita**
**Schlesienstrasse 10**
**D-8602 Memmelsdorf(DE)**

(72) Erfinder: **Reuss, Rita**
**Schlesienstrasse 10**
**D-8602 Memmelsdorf(DE)**

(74) Vertreter: **Göbel, Matthias, Dipl.-Ing.**
**Pruppacher Hauptstrasse 5-7**
**D-8501 Pyrbaum-Pruppach(DE)**

(54) **Verfahren zum Erzeugen von Humus.**

(57) Bei einem Verfahren zum Erzeugen von Humus aus verrottbaren Materialien ist zu unabhängig vom Ort des Anfalls an verrottbaren Materialien die Erzeugung von Humus aus diesen Materialien in beliebigen Gegenden dadurch möglich, daß die verrottbaren Materialien zerkleinert und in zerkleinertem Zustand durch Zusatz von Wasser nachfolgend zu einem Mischgut aufbereitet werden, daß das Mischgut unter Absonderung des Aufbereitungswassers durch Preßkraft zu Trockenkörpern verformt wird und die Trockenkörper angefeuchtet gemeinsam mit Regenwürmern bzw. Wurmbrut ein- oder mehrschichtig im Erdboden eingebracht werden.

EP 0 388 496 A1

## Verfahren zum Erzeugen von Humus

Die Erfindung betrifft ein Verfahren zur Erzeugung von Humus aus verrottbaren Materialien.

Es ist bekannt, verrottbare Materialien auf Haufen zu sammeln und nach einer mehr oder weniger langen Verrottungszeit die so erzielten Humusmaterialien lose auf Erdböden aufzubringen. Abgesehen davon, daß die Verrottung in den Haufen nur ungleichmäßig erfolgt und so wertvolle Anteile der Materialien ungenutzt bleiben, ist der Transport bzw. das Einbringen der Humusmaterialien in Erdböden auch umständlich und ungleichmäßig. Darüberhinaus führt der Feuchtegehalt der Humusmaterialien auch zu Transportproblemen, die Transporte nur über kurze Entfernungen erlauben.

Die Erfindung hat zur Aufgabe Maßnahmen zu schaffen, die unabhängig vom Ort des Anfalls der verrottbaren Materialien die Erzeugung von Humus aus diesen Materialien wirtschaftlich vorteilhaft in beliebigen Gegenden erlauben.

Gemäß der Erfindung ist diese Aufgabe dadurch gelöst, daß die verrottbaren Materialien zerkleinert und in zerkleinertem Zustand durch Zusatz von Wasser nachfolgend zu einem Mischgut aufbereitet werden, daß das Mischgut unter Absonderung des Aufbereitungswassers durch Preßkraft zu Trockenkörpern verformt wird und die Trockenkörper angefeuchtet gemeinsam mit Regenwürmern bzw. Wurmbrut ein- oder mehrschichtig im Erdboden eingebracht werden. Bevorzugt können die Trockenkörper Matten, Platten-oder Formkörper bilden und die Presskraft durch eine das Mischgut kontinuierlich oder periodisch aufnehmende Presse ausgeübt werden. Vermittels der Verfahrensschritte sind so beliebig große Mengen von verrottbaren Materialien fäulnisfrei zu bevorraten und stapelfähig sowie einfach und leicht transportierbar, wodurch sich eine Entlastung der üblichen Deponien erzielen läßt. Dabei stellen die Verfahrensschritte den erforderlichen Nährboden für humuserzeugende Lebewesen zur Verfügung, wodurch sich im Erdboden ein lebhaftes mikrobiologisches Bodenleben erzielen läßt. Fernerhin sorgen die Verfahrensschritte für eine günstige Beeinflussung des Wasserhaushalts der Erdböden und die Schaffung einer humusreichen Krümelstruktur für die Erdböden. Schließlich ermöglichen die Matten, Platten-und Formkörper aber auch eine einfache und schnelle, insbesondere maschinelle Verlegung in Erdböden dergestalt, daß nach Abheben einer Erdbodenschicht, das Einbringen von Matten, Platten bzw. Formstücke od. dgl. zusammen mit Würmern erfolgt und nachfolgend die abgehobene Erdbodenschicht auf die Matten, Platten bzw. Formstücke aufgebracht wird. Als bevorzugter Wurmbesatz hat sich die Sorte Tennessee-Wiggler erwiesen. Darüberhinaus lassen die günstigen Transporteigenschaften der getrockneten Materialien weite Entfernungen zwischen Herstellungsort der Matten, Platten bzw. Formkörper und dem Verlegungsort zu, wodurch sich z. B. die Matten, Platten bzw. Formkörper in Ballungsgebieten mit großen Materialanfall herstellen und in Gebieten mit geringem oder keinem Materialanfall verlegen lassen.

Weiter ist vorgesehen, dem Aufbereitungswasser und/oder dem Mischgut Wirkstoffe zur Erdbodenverbesserung, z. B. Kräuter oder Spurenelemente zuzusetzen. Außerdem besteht die Möglichkeit, dem Aufbereitungswasser und/oder dem Mischgut Mineralstoffe, beispielsweise Quarzsande, Urgesteinsmehl oder zur Förderung der Aktivität der Re genwürmer Futterstoffe und/oder Reiz- oder Geschmacksstoffe zuzusetzen. Als Geschmacksstoff kann z. B. Blut Verwendung finden.

Ferner ist vorgesehen, daß die Matten bzw. Platten als starre oder rollbare ebene Körper ausgeformt werden. Hierbei können die Matten bzw. Platten mit beliebiger Dicke ausgeführt sein. Das Aufrollen der Matten und Platten erbringt den Vorteil einer platzsparenden Aufbewahrung und günstigen Transportfähigkeit. Als vorteilhaft hat sich ferner erwiesen, wenn die Matten bzw. Platten zur Bildung von Kammern oder Hohlräumen mit ein- oder beidseitig aufgesetzten höckerartigen Ansätzen versehen werden. Die Kammern oder Hohlräume bilden Aufnahmeräume für die Regenwürmer aus die heraus die Regenwürmer die Matten oder Platten durchfressen, in Richtung der Erdoberfläche Gänge graben und den Wurmhumus an eine für die Pflanze günstige Stelle oberhalb der Matten oder Platten verbringen. Verwendbare Formkörper können beliebige Gestalt, z. B. in der Art von Kugeln, Zylindern oder Prismen ausgeführt sein. Auch sind Formkörper mit Eiform denkbar. Die Verlegung von Formkörpern läßt sich besonders einfach, z. B. durch Eindrücken derselben in der Art von Sämaschinen oder durch Einackern erzielen. Hierbei können jeweils ein Formkörper bzw. mehrere Formkörper eine Einheit bilden. Auch ist möglich, die Formkörper als kreuzförmige Körper auszuformen, die als Abstandshalter für Pflaster oder Rasensteine zum Einsatz bringbar sind.

Das Wesentliche der Erfindung wird in der Herstellung von homogenen Trockenkörpern aus verrottbarem Material, z. B. Hausabfällen, Gartenabfällen, Papieren und Pappen, Forstabfällen usw. gesehen, die sich durch ein geringes Gewicht, leichte Transportfähigkeit, auch über weite Entfernungen, und durch eine günstige Nährstoff basis für die humuserzeugenden Lebewesen, insbesondere Regenwürmer auszeichnen.

Die Erfindung ist in der Zeichnung anhand von Ausführungsbeispielen verdeutlicht. Es zeigen:

Fig. 1 eine Matte aus verrottbaren Materialien in Seitenansicht,

Fig. 2 eine Matte gemäß Fig. 1, gerollt,

Fig. 3 eine wellenförmige Matte, in Seitenansicht,

Fig. 4 einen Plattenkörper mit aufgesetzten Höckern, im Schnitt,

Fig. 5, 6 und 7 Formkörper aus verrottbaren Materialien,

Fig. 8 einen kreuzförmigen Formkörper aus verrottbaren Materialien, in Draufsicht,

Fig. 9 Gartenplatten mit einem Formkörper gem. Fig. 8, in Draufsicht,

Fig. 10 eine wellenförmige Matte nach Fig. 3 mit Erdbodenschichten, im Schnitt und

Fig. 11 eine Erdbodenschicht im Schnitt mit eingelegten Formkörpern nach Fig. 5, 6 und 7.

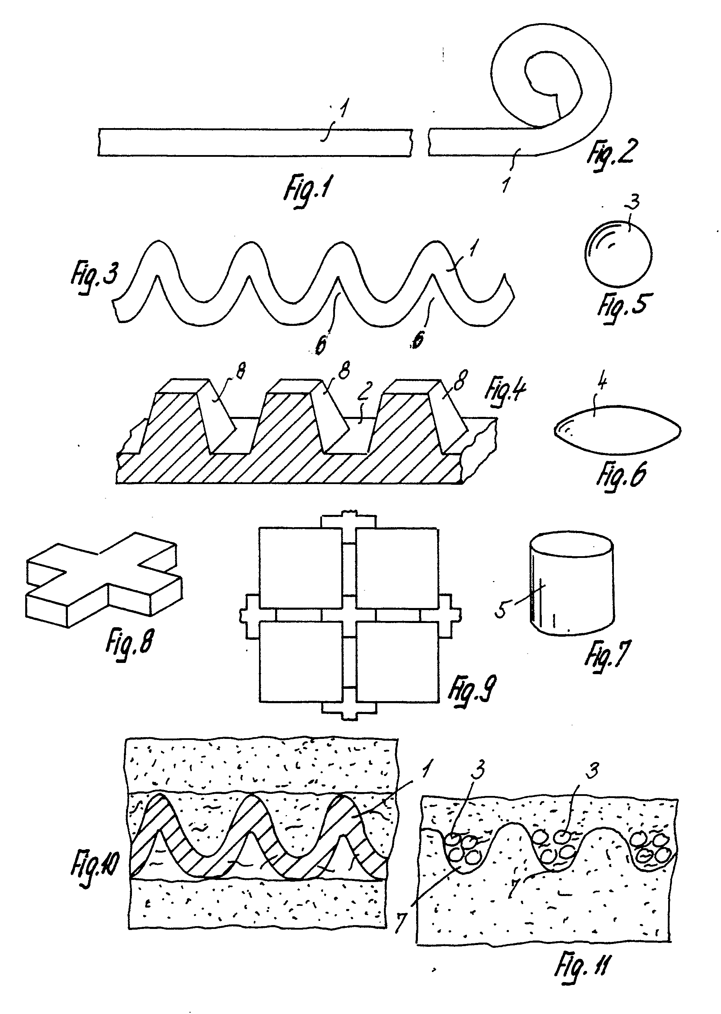

Die in den Fig. gezeigten Matten 1, Plattenkörpern 2 und Formkörper 3, 4, 5 sind durch Verpressen eines aus zerkleinerten und verrottbaren Materialien und Wasser gebildeten Mischgutes als Trockenkörper herstellbar. Die Verpressung wird unter gleichzeitiger Formgebung durchgeführt. Die Matten 1, Plattenkörper 2 und Formkörper 3, 4, 5 stehen nach der Absonderung des Aufbereitungswassers in der Presse verbrauchsfertig zur Verfügung und sind fäulnisfrei leicht und platzsparend stapel- und transportierbar. Bei gewellten Matten 1 entsprechend der Fig. 3 bzw. bei der Ausbildung von höckerartigen Ansätzen 8 an diesen, gemäß Fig. 4 bilden sich unterhalb der Matte oder zwischen den Ansätzen 8 Hohl räume 6, die als Luftkammern dienen und die Aufnahme der Regenwürmer ermöglichen. Die Hohlräume 6 bilden Brutplätze für die Würmer, aus denen heraus die Würmer die Matte oder den Plattenkörper durchfressen bzw. auffressen, wie in Fig. 10 dargestellt.

Für die Verlegung der Matten 1 nach Fig. 10 wird zunächst eine Erdbodenschicht abgetragen, dann die Matte 1 gemeinsam mit Regenwürmern in die so geschaffenen Vertiefungen des Erdbodens eingebracht und nachfolgend die abgetragene Erdbodenschicht auf die Matte 1 zurückgelegt.

Beim Verlegungsbeispiel der Fig. 11 sind durch ein in der Art eines Pfluges wirkendes Gerät (nicht gezeigt) Rillen 7 in den Erdboden einzuarbeiten, in die Formkörper 5 zusammen mit Würmern eingelegt werden. Nachfolgend sind die Rillen 7 zuzuschieben.

In Fig. 8 ist ein kreuzförmiger Formkörper 9 gezeigt, der als Abstandshalter in den Fugenbereichen von Gartenplatten 10 (Fig. 9) eingelegt werden kann.

**Ansprüche**

1. Verfahren zum Erzeugen von Humus aus verrottbaren Materialien, dadurch gekennzeichnet, daß die verrottbaren Materialien zerkleinert und in zerkleinertem Zustand durch Zusatz von Wasser nachfolgend zu einem Mischgut aufbereitet werden, daß das Mischgut unter Absonderung des Aufbereitungswassers durch Preßkraft zu Trockenkörper verformt wird und die Trockenkörper angefeuchtet gemeinsam mit Regenwürmern bzw. Wurmbrut ein-oder mehrschichtig im Erdboden eingebracht werden.

2. Verfahren nach Anspruch 1, dadurch gekennzeichnet, daß die Preßkraft durch eine das Mischgut kontinuierlich oder periodisch aufnehmende Presse aufgebracht wird.

3. Verfahren nach Anspruch 1, dadurch gekennzeichnet, daß dem Aufbereitungswasser und/oder dem Mischgut Wirkstoffe zur Erdbodenverbesserung zugesetz werden.

4. Verfahren nach Anspruch 1 und 3, dadurch gekennzeichnet, daß dem Aufbereitungswasser und/oder dem Mischgut Mineralstoffe zugesetzt werden.

5. Verfahren nach Anspruch 1, 3 und 4, dadurch gekennzeichnet, daß dem Aufbereitungswasser und/oder dem Mischgut Futterstoffe und/oder Reiz- und Geschmacksstoffe für die Regenwürmer bzw. die Regenwurmbrut zugesetzt werden.

6. Verfahren nach Anspruch 1, dadurch gekennzeichnet, daß die Trockenkörper als starre oder aufrollbare ebene Matten oder Plattenkörper bzw. als Formkörper ausgeformt werden.

7. Verfahren nach Anspruch 6, dadurch gekennzeichnet, daß die Matten und Plattenkörper als Wellkörper ausgeformt werden.

8. Verfahren nach Anspruch 1 und 7, dadurch gekennzeichnet, daß die Matten und Plattenkörper zur Bildung von Kammern oder Hohlräumen mit ein-oder beidseitig aufgesetzten höckerartigen Ansätzen ausgeformt werden.

9. Verfahren nach Anspruch 1, dadurch gekennzeichnet, daß die Formkörper durch Kugeln, Zylinder oder Prismen gebildet werden.

10. Verfahren nach Anspruch 1, dadurch gekennzeichnet, daß die Formkörper Eiform aufweisen.

11. Verfahren nach Anspruch 1, dadurch gekennzeichnet, daß die Formkörper als Abstandshalter für Pflaster-oder Rasensteine dienende kreuzförmige Körper ausgeformt werden.

Fig.1

Fig.2

Fig.3

Fig.5

Fig.4

Fig.6

Fig.8

Fig.9

Fig.7

Fig.10

Fig.11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | COMPENDIUM ON SOLID WASTE MANAGEMENT BY VERMICOMPOSTING, August 1980, Kontrakt Nr. 68-03-2803, Camp, Dresser & McKee, Inc., Boston, Massachusetts, US * Seite 46, Zeilen 20-43 * | 1-6,9-11 | C 05 G 5/00 C 05 F 15/00 E 01 C 9/00 |
| Y | CH-A- 513 780 (H. GERHARD-MOSER) * Spalten 5,6 * | 1,2,4,6 | |
| Y | DE-B-1 151 005 (H. METZ) * Ansprüche 1 * | 5 | |
| Y | DE-A-1 592 588 (CHEMISCHE WERKE ALBERT) * Ansprüche * | 9 | |
| Y | EP-A-0 143 913 (FOLAB I KATRINEHOLM AB) * Ansprüche * | 1-4,9,10 | |
| Y | DE-U-8 623 951 (SF-VOLLVERBUNDSTEIN-KOOPERATION GmbH) * Anspruch 1; Seite 5, Zeilen 4-8 * | 11 | RECHERCHIERTE SACHGEBIETE (Int. Cl.5) C 05 F C 05 G |

Der vorliegende Recherchenbericht wurde für alle Patentansprüche erstellt

| Recherchenort | Abschlußdatum der Recherche | Prüfer |
|---|---|---|
| DEN HAAG | 29-11-1989 | SCHUT,R.J. |